# EUROPÄISCHE PATENTANMELDUNG

(11) **EP 2 106 891 A1**
(43) Veröffentlichungstag der Anmeldung: **07.10.2009**
(21) Anmeldenummer: 09405058.0
(22) Anmeldetag: 31.03.2009
(51) Int. Cl.: B29B 13/02, B30B 15/06, H05B 6/02

(54) **Heizplatte für Werkstücke**

(30) Priorität: 04.04.2008 EP 08006869
(71) Anmelder: Komax Holding AG, 6036 Dierikon (CH)
(72) Erfinder: Meisser, Claudio, 6330 Cham (CH); Bucher, Markus, 6033 Buchrain (CH)
(74) Vertreter: EGLI-EUROPEAN PATENT ATTORNEYS

(57) **Zusammenfassung**

Die Heizplatte (2) für Werkstücke umfasst einen heizbaren Körper (20), welcher auf einer ersten Seite eine Kontaktfläche (15) für das jeweilige Werkstück aufweist, mindestens einen mit einer Heizflüssigkeit gefüllten Heizkanal (25) zum Heizen des heizbaren Körpers (20), welcher Heizkanal (25) in und/oder an dem heizbaren Körper (20) gegenüber der Kontaktfläche (15) ausgebildet ist, und Heizmittel (35) zum Heizen der Heizflüssigkeit. Eine Kanalwand (25.1) des jeweiligen Heizkanals (25) ist induktiv erwärmbar und die Heizmittel (35) umfassen mindestens eine Heizeinrichtung (35.1) zum induktiven Heizen der jeweiligen Kanalwand (25.1), wobei die Heizeinrichtung (35.1) ausserhalb des jeweiligen Heizkanals (25) angeordnet ist und die Heizflüssigkeit in dem jeweiligen Heizkanal (25) durch einen Übergang von Wärme, welche mittels der Heizeinrichtung (35.1) in der Kanalwand (25.1) erzeugbar ist, erwärmbar ist.

## Beschreibung

Die Erfindung bezieht sich auf eine Heizplatte für Werkstücke mit einem heizbaren Körper, welcher auf einer ersten Seite eine Kontaktfläche für das jeweilige Werkstück aufweist.

Heizplatten dieser Art werden beispielsweise zum Laminieren von Werkstücken verwendet und in diesem Zusammenhang insbesondere in Laminierpressen zur Herstellung von photovoltaischen Modulen eingesetzt. Beim Laminieren verbindet sich eine dünne, meist folienartige Schicht mit einem Trägermaterial. In vielen Fällen, beispielsweise bei der Herstellung von photovoltaischen Modulen, ist es notwendig, den Laminierprozess bei erhöhten Temperaturen durchzuführen (Heisslaminieren). Dabei wird in der Regel das zu verarbeitende Werkstück (d. h. das mit der zu verbindenden Schicht bedeckte Trägermaterial) an einer auf einer Heizplatte ausgebildeten Kontaktfläche für das Werkstück angeordnet, auf eine vorgegebene Temperatur erwärmt und anschliessend gepresst. Für den Laminierprozess ist es wichtig, dass die Temperaturverteilung an der Kontaktfläche für das jeweilige Werkstück möglichst gleichmässig ist.

Ein erster Typ von derartigen Heizplatten verfügt über meist stabförmige Heizeinrichtungen, die direkt an einem Heizplattenkörper angebracht sind. Da die Wärme über Wärmeleitung an den Heizplattenkörper abgegeben wird, ist ein möglichst guter Kontakt zwischen den jeweiligen Wärmequellen der Heizeinrichtungen und dem Heizplattenkörper notwendig. Dies wird durch das Einlegen der Heizeinrichtungen in genau gefertigte Nuten erreicht, wobei die Heizeinrichtungen eingeklemmt werden können und die Wärmeleitung durch das Aufbringen von Wärmeleitpaste zusätzlich verbessert werden kann. Allerdings ist es auch im optimalen Fall schwierig, eine gleichmässige Temperaturverteilung über eine grosse Fläche zu erreichen. Das ist nachteilig im Hinblick auf das Laminieren grossflächiger Werkstücke, beispielsweise zur Herstellung von photovoltaischen Modulen, welche eine Fläche von mehr als 1 m² aufweisen können.

Bei einem zweiten Typ von Heizplatten, wie er beispielsweise in EP1340611 A2 offenbart wird, sind Hohlräume vorgesehen, welche von einem flüssigen Wärmeträgermedium, das zur Erwärmung und/oder Abkühlung der jeweiligen Heizplatte dient, durchströmt werden. Das Aufheizen, die Abkühlung und die Temperaturregelung des Wärmeträgermediums erfolgt dabei ausserhalb der Heizplatte mittels eines Heizkreislaufs, welcher ein Heizaggregat umfasst, und eines Kühlkreislaufs, welcher mindestens einen Kühler aufweist. Das Heizaggregat und die jeweiligen Kühler für das Wärmeträgermedium sind dabei über verschiedene Leitungen an die jeweiligen Hohlräume der Heizplatte angeschlossen. Da das Wärmeträgermedium beim Strömen durch die üblicherweise relativ langen Hohlräume der Heizplatte viel Wärmeenergie abgibt bzw. aufnimmt, ist es auch bei diesem Typ von Heizplatten schwierig, die Temperatur über die gesamte Kontaktfläche für das jeweilige Werkstück konstant zu halten.

In EP1517585 B1 ist ein weiterer Typ von Heizplatten beschrieben, bei denen zum Heizen eine Heizflüssigkeit verwendet wird, welche in der jeweiligen Heizplatte ausgebildete Hohlräume durchströmt. Die Heizflüssigkeit wird in diesem Fall durch Heizelemente erwärmt, die sich innerhalb der Hohlräume befinden und von der Heizflüssigkeit umströmt werden. Diese Lösung ist aufwändig, da die Heizelemente gegen die Flüssigkeit elektrisch isoliert und abgedichtet werden müssen. Weiterhin sind alle Heizelemente mit Abstandhaltern versehen, welche für eine Zentrierung der Heizelemente in den jeweiligen Hohlräumen sorgen, um eine direkte Berührung der Heizelemente mit den Wänden der Hohlräume zu verhindern. In diesem Fall ist es schwierig, derartige Heizelemente in Hohlräumen mit einer komplizierten Anordnung der Hohlraumwände unterzubringen, beispielsweise in einem System aus mehreren Hohlräumen, die relativ zueinander verwinkelt sind, oder in Hohlräumen, die mehrfach verzweigt sind. Die genannten Heizelemente können demnach unter Umständen nicht oder gegebenenfalls nur mit erheblichem Aufwand in Hohlräume mit einer komplizierten Anordnung der Hohlraumwände eingebaut werden. Dies ist nachteilig im Hinblick auf das Heizen von Heizplatten, welche eine grosse Kontaktfläche aufweisen und zum Heizen grossflächiger Werkstücke dienen sollen.

Ausgehend von dem erwähnten Stand der Technik liegt der Erfindung die Aufgabe zugrunde, die genannten Nachteile zu vermeiden und eine Heizplatte zu schaffen, die mit einer Heizflüssigkeit heizbar ist und es ermöglicht, mit einfachen Mitteln eine möglichst konstante Temperatur an einer Kontaktfläche für das zu heizende Werkstück zu erzielen.

Diese Aufgabe wird durch eine Heizplatte mit den Merkmalen des Anspruchs 1 gelöst.

Diese Heizplatte umfasst einen heizbaren Körper, welcher auf einer ersten Seite eine Kontaktfläche für das jeweilige Werkstück aufweist, mindestens einen Heizkanal zum Heizen des heizbaren Körpers, welcher Heizkanal in und/oder an dem heizbaren Körper gegenüber der Kontaktfläche ausgebildet ist und mit einer Heizflüssigkeit gefüllt ist, und Heizmittel zum Heizen der Heizflüssigkeit.

Gemäss der Erfindung ist eine Kanalwand des jeweiligen Heizkanals induktiv erwärmbar und die Heizmittel umfassen mindestens eine Heizeinrichtung zum induktiven Heizen der jeweiligen Kanalwand, wobei die Heizeinrichtung ausserhalb des jeweiligen Heizkanals angeordnet ist und die Heizflüssigkeit in dem jeweiligen Heizkanal durch einen Übergang von Wärme, welche mittels der Heizeinrichtung in der Kanalwand erzeugbar ist, erwärmbar ist.

Dadurch, dass die Heizmittel ausserhalb des jeweiligen Heizkanals angeordnet sind, können die Heizmittel mit relativ wenig Aufwand am heizbaren Körper montiert werden. Dabei schränkt die jeweilige Anordnung bzw. Form des jeweiligen Heizkanals die Wahl der Orte, an denen die jeweiligen Heizmittel am heizbaren Körper platziert werden können, nicht bzw. nicht wesentlich ein, zumal Komplikationen, die mit dem Einbau von Heizmitteln in den jeweiligen Heizkanal verbunden wären, prinzipiell vermieden werden.

Dadurch, dass die Heizmittel erfindungsgemäss derart angeordnet sind, dass die Wärme, die mittels der Heizmittel erzeugbar ist, durch eine Kanalwand des jeweiligen Heizkanals in die Heizflüssigkeit einbringbar ist, und dadurch, dass der jeweilige Heizkanal gegenüber der Kontaktfläche für das Werkstück angeordnet ist, ist weiterhin gewährleistet, dass Wärmeverluste in der Heizflüssigkeit jeweils nahe an der Kontaktfläche für das Werkstück ausgeglichen werden können. Dadurch ist die Möglichkeit gegeben, eine gleichmässige Temperaturverteilung an der Kontaktfläche zu realisieren.

Dadurch, dass die Kanalwand des jeweiligen Heizkanals induktiv erwärmbar ist und die jeweilige Heizeinrichtung zum induktiven Heizen der Kanalwand ausgebildet ist, wird erreicht, dass die Kanalwand effizient erwärmt und Wärme in die Heizflüssigkeit transportiert werden kann, selbst wenn die Heizeinrichtung nicht in Kontakt mit der Kanalwand steht. Die Heizeinrichtung kann in einem Abstand zur Kanalwand angeordnet sein, beispielsweise auf der von der Kontaktfläche abgewandten Seite des heizbaren Körpers. Dies vereinfacht die Montage der Heizeinrichtung.

Um eine induktive Heizung der Kanalwand zu ermöglichen, kann die Kanalwand aus einem elektrisch leitfähigen Material, beispielsweise einem Metall, gefertigt werden. Um die Effizienz der induktiven Heizung der Kanalwand zu optimieren, kann die Kanalwand aus einem magnetisierbaren Material, beispielsweise einem ferromagnetischen Material, insbesondere einem ferromagnetischen Metall wie Eisen oder einer Eisenlegierung (beispielsweise Stahl), gefertigt sein. Durch eine geeignete Wahl der Werkstoffe für den heizbaren Körper bzw. für die jeweilige Kanalwand kann erreicht werden, dass mittels der Heizeinrichtung im Wesentlichen nur in der Kanalwand Wärme erzeugt wird. Dies führt zu einem effizienten Transport der erzeugten Wärme in die Heizflüssigkeit und zu einer besonders gleichmässigen Verteilung dieser Wärme über das gesamte Volumen des heizbaren Körpers.

Im Rahmen der Erfindung kann die Temperaturverteilung an der Kontaktfläche durch verschiedene Massnahmen beeinflusst werden. Die Homogenität der Temperaturverteilung an der Kontaktfläche kann beispielsweise durch die räumliche Anordnung des jeweiligen Heizkanals bzw. der jeweiligen Heizkanäle und/oder die räumliche Anordnung der jeweiligen Heizmittel beeinflusst und entsprechend optimiert werden. Die Homogenität der Temperaturverteilung an der Kontaktfläche kann weiterhin durch eine gezielte Beeinflussung der räumlichen Verteilung des jeweiligen Wärmestroms, der in bestimmten Bereichen der jeweiligen Kanalwand in die Heizflüssigkeit eingebracht wird, beeinflusst und entsprechend optimiert werden. Um Temperaturdifferenzen zwischen verschiedenen Orten an der Kontaktfläche zu minimieren bzw. zu kompensieren, können beispielsweise eine Vielzahl von Heizeinrichtungen ausserhalb des jeweiligen Heizkanals bzw. der Heizkanäle angeordnet werden, wobei die Wärmeleistung, welche die einzelnen Heizeinrichtungen durch die jeweiligen Kanalwände an die Heizflüssigkeit abgeben, jeweils von Ort zu Ort variieren kann. Weiterhin können die jeweiligen Heizkanäle so ausgelegt werden, dass eine Zirkulation der Heizflüssigkeit in den jeweiligen Heizkanälen ermöglicht wird, gegebenenfalls erzwungen durch eine Pumpe, die für einen Fluss der Heizflüssigkeit durch die jeweiligen Heizkanäle sorgt. Auch diese Massnahme kann dazu beitragen, eine gleichmässige räumliche Verteilung der Temperatur an der Kontaktfläche zu erzielen.

Weitere Einzelheiten der Erfindung und insbesondere beispielhafte Ausführungsformen der Erfindung werden im Folgenden anhand der beigefügten Zeichnungen erläutert. Es zeigen:
- Fig. 1: einen Querschnitt durch eine erste Ausführungsform der erfindungsgemässen Heizplatte, mit einem heizbaren Körper, einem Heizkanal und Heizmitteln, welche Heizmittel mehrere Heizeinrichtungen zum induktiven Heizen der jeweiligen Kanalwände umfassen;
- Fig. 2: einen Querschnitt durch eine zweite Ausführungsform der erfindungsgemässen Heizplatte, mit Heizmitteln gemäss Fig. 1;
- Fig. 3: einen Querschnitt durch eine dritte Ausführungsform der erfindungsgemässen Heizplatte, mit Heizmitteln gemäss Fig. 1;
- Fig. 4: einen Querschnitt durch eine vierte Ausführungsform der erfindungsgemässen Heizplatte, mit Heizmitteln gemäss Fig. 1;
- Fig. 5: eine perspektivische Ansicht einer fünfte Ausführungsform der erfindungsgemässen Heizplatte, dargestellt ohne Heizmittel;
- Fig. 6: eine perspektivische Ansicht eines Teils einer sechsten Ausführungsform der erfindungsgemässen Heizplatte, dargestellt ohne Heizmittel;
- Fig. 7: die Ausführungsform gemäss Fig. 6, mit Heizmitteln;
- Fig. 8: einen Querschnitt durch eine siebte Ausführungsform der erfindungsgemässen Heizplatte, mit Heizmitteln gemäss Fig. 1;
- Fig. 9: eine perspektivische Ansicht eines Teils der Heizplatte gemäss Fig. 8, dargestellt ohne Heizmittel;
- Fig. 10: einen Abschnitt der Heizplatte gemäss Fig. 8, dargestellt zusammen mit einem Werkzeug zum Herstellen einer Schweissverbindung zwischen verschiedenen Teilen der Heizplatte;
- Fig. 11: eine perspektivische Ansicht eines Abschnitts einer achten Ausführungsform der erfindungsgemässen Heizplatte, dargestellt ohne Heizmittel;
- Fig. 12: einen Querschnitt durch die Heizplatte gemäss Fig. 11 (geschnitten entlang einer Ebene senkrecht zu den Pfeilen XII in Fig. 11);
- Fig. 13: einen Schnitt durch die Heizplatte gemäss Fig. 11, geschnitten entlang der Linie XIII-XIII in Fig. 12.

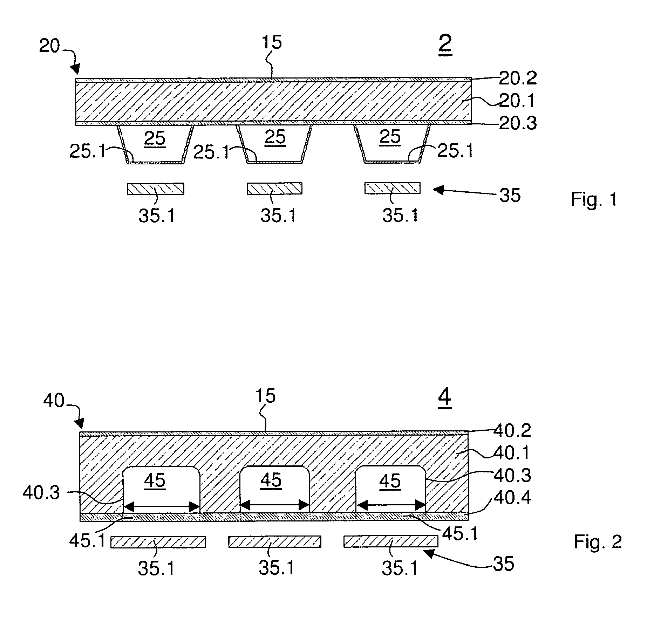

Fig. 1 zeigt einen Querschnitt durch eine Heizplatte 2, welche einen heizbaren Körper 20, einen mit einer Heizflüssigkeit gefüllten Heizkanal 25 und Heizmittel 35 zum Heizen der Heizflüssigkeit umfasst. Der heizbare Körper 20 hat auf einer Seite eine Kontaktfläche 15, mit welcher ein mittels der Heizplatte 2 zu heizendes Werkstück in Kontakt gebracht werden kann. Im vorliegenden Fall ist der heizbare Körper 20 als ebene Platte ausgebildet.

Der Heizkanal 25 ist an der der Kontaktfläche 15 gegenüber liegenden Seite des heizbaren Körpers 20 angeordnet. Um einen möglichst grossen Teil der Oberfläche des heizbaren Körpers in Kontakt mit der im Heizkanal 25 geführten Heizflüssigkeit zu bringen, weist der Heizkanal 25 eine Vielzahl verschiedener Längsabschnitte auf, von denen einige parallel zueinander und andere in einem rechten Winkel zueinander angeordnet sind, wobei die Längsabschnitte derart miteinander verbunden sind, dass die Heizflüssigkeit im Heizkanal 25 längs einer geschlossenen Bahn entlang der Oberfläche des heizbaren Körpers 20 zirkulieren kann.

Die Fig. 1 zeigt mehrere Längsabschnitte des Heizkanals 25 im Querschnitt. Die Kanalwand 25.1 des Heizkanals 25 weist im vorliegenden Fall im Querschnitt ein trapezförmiges Profil auf und ist an zwei Seiten jeweils mit dem heizbaren Körper 20 derart verbunden, dass der Heizkanal 25 für die Heizflüssigkeit dicht ist. Dabei kann die Kanalwand 25.1 beispielsweise als Blechkonstruktion ausgeführt sein. Die Befestigung der Kanalwand 25.1 am heizbaren Körper 20 kann beispielsweise durch Verschrauben oder durch eine Schweissverbindung erfolgen. Eine Schweissverbindung hat den Vorteil, dass keine Dichtung notwendig ist.

Die Heizmittel 35 sind ausserhalb des Heizkanals 25.1 angeordnet und umfassen mehrere Heizeinrichtungen 35.1 zum induktiven Heizen der Kanalwand 25.1, wobei vorausgesetzt ist, dass die Kanalwand aus einem Werkstoff besteht, der induktiv erwärmbar ist. Im vorliegenden Fall kann die Kanalwand 25.1 beispielsweise aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein. Die Heizmittel 35 erlauben es somit, die Kanalwand 25.1 in verschiedenen Bereichen von aussen aufzuheizen. Die Erwärmung der Heizflüssigkeit erfolgt durch Wärmeübergang von der erwärmten Kanalwand 25.1 zur Heizflüssigkeit. Die Wärme, die mittels der Heizmittel 35 erzeugbar ist, ist demnach von den Heizeinrichtungen 35.1 durch die Kanalwand 25.1 des Heizkanals 25 in die Heizflüssigkeit einbringbar.

Wie Fig. 1 andeutet, müssen die Heizeinrichtungen 35.1 die Kanalwand 25.1 nicht berühren. Gegebenenfalls können sich zwischen dem Kanal 25 und den Heizeinrichtungen 35.1 Bauteile aus nicht magnetisierbarem Material oder aus Werkstoffen, die durch die Heizeinrichtungen 35.1 nicht oder nicht wesentlich aufgeheizt werden können (beispielsweise wärmeisolierende Werkstoffe) und somit keinen wesentlichen Teil der Heizleistung der Heizeinrichtungen 35.1 absorbieren, befinden.

Der heizbare Körper 20 kann, wie Fig. 1 andeutet, mehrschichtig aufgebaut sein: Im vorliegenden Fall besteht der Körper 20 aus (i) einer ebenen Platte 20.1, (ii) einer ebenen Schicht 20.2, deren eine Seite die Kontaktfläche 15 bildet und deren andere Seite mit der Platte 20.1 an einer der Kontaktfläche 15 zugewandten Oberfläche der Platte 20.1 verbunden ist, und (iii) einer Schicht 20.3, die mit der Platte 20.1 an einer von der Kontaktfläche 15 abgewandten Oberfläche der Platte 20.1 verbunden ist.

Der mehrschichtige Aufbau des heizbaren Körpers 20 ermöglicht insbesondere eine Optimierung hinsichtlich der mechanischen und wärmetechnischen Eigenschaften des Körpers 20. Generell ist es vorteilhaft, wenn die Platte 20.1 und die Schichten 20.2 und 20.3 eine möglichst hohe Wärmeleitfähigkeit und/oder ein möglichst geringes Gewicht aufweisen und/oder kostengünstig herstellbar sind. Die Platte 20.1 kann so ausgelegt werden, dass sie den grössten Teil des Volumens des Körpers 20 einnimmt und die mechanische Stabilität des Körpers 20 gewährleistet. Die Schicht 20.2 kann beispielsweise so ausgelegt werden, dass der heizbare Körper 20 an der Kontaktfläche 15 besonders verschleissfest ausgebildet ist. Die Schicht 20.3 kann wiederum so gewählt werden, dass die Herstellung einer Verbindung zwischen der Kanalwand 25.1 und dem Körper 20, beispielsweise mittels Schweissen, vereinfacht wird.

Für den heizbaren Körper 20 an sich und insbesondere für die Platte 20.1 ist Aluminium oder eine Aluminiumlegierung (wegen der guten Wärmeleitfähigkeit und des kleinen Gewichts) ein geeigneter Werkstoff. Auch die Verwendung von Kupfer oder einer Kupferlegierung ist denkbar. Die Schicht 20.2 kann beispielsweise aus Stahl gefertigt sein, um eine hohe Verschleissfestigkeit zu gewährleisten. Die Schicht 20.3 kann beispielsweise aus Kupfer oder Stahl bestehen. Derartige Schichten 20.2 und 20.3 lassen sich beispielsweise durch Sprengplattieren oder Hochdruckwalzen auf die Platte 20.1 aufbringen. Als geeigneter Werkstoff für die Kanalwand 25.1 kann im vorliegenden Fall beispielsweise Kupfer angesehen werden, um eine hohe Wärmeleitfähigkeit zu gewährleisten.

Die Fig. 2-4 zeigen Heizplatten 4, 6, und 8, welche sich von der Heizplatte 2 gemäss Fig. 1 hauptsächlich durch verschiedene Realisierungen von Heizkanälen unterscheiden, wobei als Heizmittel die Heizmittel 35 gemäss Fig. 1 dienen.

Die Heizplatte 4 gemäss Fig. 2 umfasst einen heizbaren Körper 40 mit einem Heizkanal 45. Der Körper 40 besteht aus: einer Platte 40.1, in der auf einer Seite eine meanderförmig ausgebildete Nut 40.3 ausgebildet ist; einer Schicht 40.2, welche mit der Platte 40.1 auf einer der Nut 40.3 gegenüber liegenden Seite verbunden ist und die Kontaktfläche 15 für ein zu heizendes Werkstück bildet; eine Deckplatte 40.4, welche die Nut 40.3 auf der der Kontaktfläche 15 gegenüber liegenden Seite abdeckt und dicht abschliesst. Der Heizkanal 45 ist dabei in der Nut 40.3 ausgebildet und jeweils durch die Platte 40.1 und die Deckplatte 40.4 begrenzt. Eine Heizflüssigkeit, mit welcher der Heizkanal gefüllt ist, kann im vorliegenden geheizt werden, indem Bereiche 45.1 der Deckplatte 40.4 (die Bereiche 45.1 sind in Fig. 2 durch gestrichelte Linien angedeutet und die Breite des jeweiligen Bereichs 45.1 ist in Fig. 2 durch einen Doppelpfeil gekennzeichnet) mittels Heizeinrichtungen 35.1 zum induktiven Heizen erwärmt werden. Wie Fig. 2 zeigt, sind die Heizeinrichtungen 35.1 zum induktiven Heizen ausserhalb des Heizkanals 45 in einem Abstand zur Deckplatte 40.4 in der Nähe der Bereiche 45.1 angeordnet. Die Bereiche 45.1 der Deckplatte 40.4 stellen im vorliegenden Fall "Kanalwände" im Sinne der Definition der Erfindung dar.

Die Deckplatte 40.4 kann nach verschiedenen Verfahren mit der Platte 40.1 verbunden werden, um den Kanal 45 dicht abzuschliessen, beispielsweise mittels Schweissen, Löten oder Verfahren zum Plattieren (beispielsweise Sprengplattieren oder Walzen). Die Deckplatte 40.4 könnte auch mit konventionellen Befestigungsmitteln wie Schrauben an der Platte 40.1 befestigt werden. In diesem Fall kann es gegebenenfalls nötig sein, den Kanal 45 mit geeigneten Dichtelementen abzudichten. Die Werkstoffe für die Platte 40.1, die Schicht 40.2 und die Deckplatte 40.4 können nach denselben (oben genannten) Grundsätzen gewählt werden wie die Werkstoffe für die entsprechenden Teile der Heizplatte 2 (d.h. Platte 20.1, die Schicht 20.2 und die Kanalwand 25.1) des heizbaren Körpers 20: die Platte 40.1 könnte beispielsweise aus Aluminium, einer Aluminiumlegierung, Kupfer oder einer Kupferlegierung, die Schicht 40.2 aus Stahl und die Deckplatte 40.4 aus Kupfer gefertigt werden.

Um die Effizienz des induktiven Heizens zu optimieren, kann der Werkstoff für die Deckplatte 40.4 im Falle der Heizplatte 4 nach den gleichen Grundsätzen gewählt werden wie der Werkstoff für die Kanalwand 25.1 der Heizplatte 2, d.h. die Deckplatte 40.4 kann beispielsweise aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein.

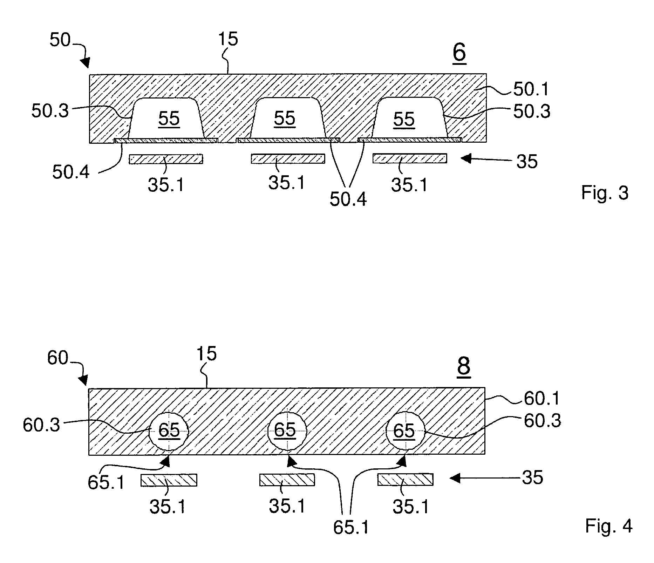

Die Heizplatte 6 gemäss Fig. 3 umfasst einen heizbaren Körper 50. Der heizbare Körper 50 umfasst eine Platte 50.1, an der auf einer Seite die Kontaktfläche 15 angeordnet ist, wobei an der der Kontaktfläche 15 gegenüber liegenden Seite der Platte 50.1 eine Nut 50.3 ausgebildet ist, welche einen mit einer Heizflüssigkeit gefüllten Heizkanal 55 begrenzt. Der heizbare Körper 50 entspricht insofern strukturell dem heizbaren Körper 40, als der Heizkanal 55 in seiner Längsrichtung denselben Verlauf aufweist wie der Heizkanal 45 der Heizplatte 4. Im Unterschied zum Heizkanal 45 ist der Heizkanal 55 auf der von der Kontaktfläche 15 abgewandten Seite von einer Vielzahl von Deckplatten 50.4 bedeckt und dicht abgeschlossen. Jede der Deckplatten 50.4 bedeckt jeweils einen von mehreren Längsabschnitten der Nut 50.3. Die Deckplatten 50.4 können als schmale Blechstreifen ausgeführt sein und haben (quer zum jeweiligen Längsabschnitt des Heizkanals 55) eine Breite, die mindestens so gross oder grösser als die Breite des jeweiligen Längsabschnitts des Heizkanals 55 ist. Die Deckplatten 50.4 können mit der Platte 50.1 durch Schweissen oder Löten verbunden werden. Alternativ können die Deckplatten 50.4 an der Platte 50.1 mit Befestigungsmitteln wie Schrauben befestigt werden, wobei der Heizkanal 55 mit Dichtelementen gegen einen Austritt der Heizflüssigkeit abgedichtet werden kann.

Wie Fig. 3 zeigt, sind die Deckplatten 50.4 im Falle der Heizplatte 6 mit den Heizmitteln 35 heizbar. Die Deckplatten 50.4 stellen demnach im vorliegenden Fall "Kanalwände" im Sinne der Definition der Erfindung dar.

Im Falle der Heizplatte 6 gemäss Fig. 3 sind die Heizmittel 35 mit mehreren Heizeinrichtungen 35.1 zum induktiven Heizen der Deckplatten 50.4 ausgestattet, wobei die jeweilige Heizrichtung 35.1 ausserhalb des Heizkanals 55 in einem Abstand zur jeweiligen Deckplatte 50.4 angeordnet ist. Wärme, die von einer der Heizeinrichtungen 35.1 in einer der Deckplatten 50.4 erzeugt wird, ist durch die jeweilige Deckplatte 50.4 des Heizkanals 55 durch einen Wärmeübergang in die Heizflüssigkeit einbringbar. Der Werkstoff der Deckplatten 50.4 kann wie der Werkstoff der Deckplatte 40.4 im Falle der Heizplatte 4 gewählt werden.

Die Heizplatte 8 gemäss Fig. 4 umfasst einen heizbaren Körper 60 mit einer Kontaktfläche 15 für ein Werkstück und mit einem Heizkanal 65, welcher mit einer Heizflüssigkeit gefüllt ist. Der Heizkanal 65 besteht aus einer Mehrzahl von Bohrungen 60.3, die gegenüber der Kontaktfläche 15 parallel zur Kontaktfläche 15 ausgebildet sind und derart miteinander verbunden sind, dass die Heizflüssigkeit im Heizkanal 65 parallel zur Kontaktfläche 15 zirkulieren kann. Die Heizflüssigkeit im Heizkanal 65 kann von der der Kontaktfläche 15 gegenüber liegenden Seite des heizbaren Körpers 60 her mit Heizeinrichtungen 35.1 zum induktiven Heizen geheizt werden. Im vorliegenden Fall kann jeweils ein Bereich 65.1 der Platte 60.1, der zwischen einer der Bohrungen 60.3 und der der Kontaktfläche 15 gegenüber liegenden Oberfläche der Platte 60.1 ausgebildet ist, als "Kanalwand" im Sinne der Definition der Erfindung angesehen werden. Die Heizeinrichtungen 35.1 der Heizmittel 35 sind im Falle der Heizplatte 8 jeweils in einem Abstand zu einer der Kanalwände 65.1 angeordnet. Die Platte 60.1 kann aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein.

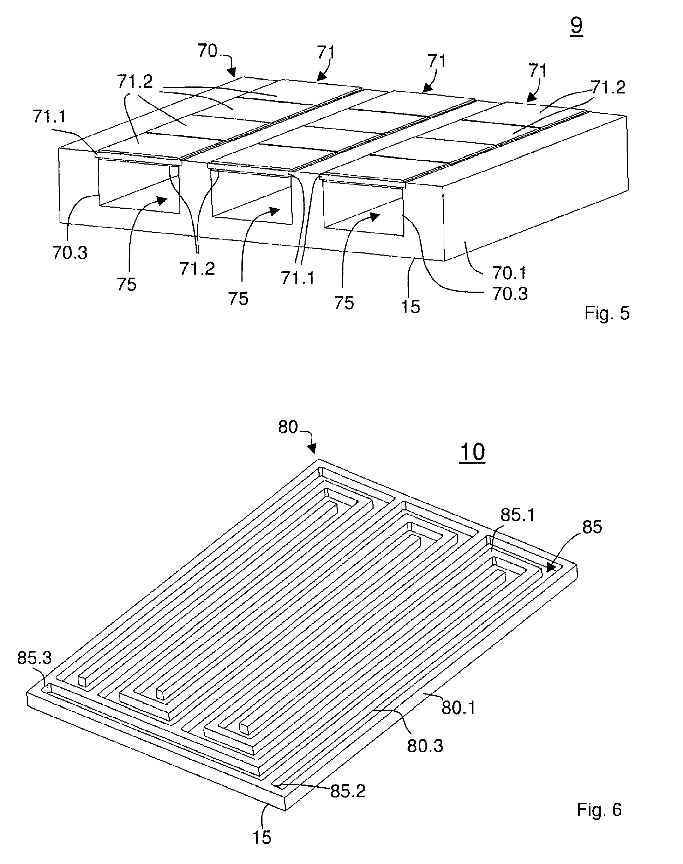

Fig. 5 zeigt eine Heizplatte 9, welche konzeptionell der Heizplatte 6 gemäss Fig. 3 ähnelt. Die Heizplatte 9 umfasst einen heizbaren Körper 70, der - ähnlich wie der heizbare Körper 50 - aus einer Platte 70.1 mit einer Kontaktfläche 15 für ein Werkstück und mit einem Heizkanal 75 besteht, wobei der Heizkanal 75 - ähnlich wie der Heizkanal 55 der Heizplatte 6 - in einer Nut 70.3 auf der der Kontaktfläche 15 gegenüber liegenden Seite der Platte 70.1 ausgebildet ist und mit einer Heizflüssigkeit gefüllt ist. Die Nut 70.3 ist dabei mit mehreren Deckplatten 71 abgedeckt, wobei jede Deckplatte 71 - ähnlich wie eine der Deckplatten 50.4 - einen Längsabschnitt der Nut 70.3 dicht verschliesst. Jede der Deckplatten stellt demnach eine "Kanalwand" im Sinne der Definition der Erfindung dar und kann - analog zu den Deckplatten 50.4 im Falle der Heizplatte 6 - beispielsweise mit Heizmitteln 35 erwärmt werden, um eine Heizung der Heizflüssigkeit im Heizkanal 75 zu ermöglichen.

Die Deckplatten 71 unterscheiden sich von den Deckplatten 50.4 dadurch, dass die Deckplatten 71 mehrschichtig aufgebaut sind. Wie Fig. 5 andeutet, umfasst jede Deckplatte einen tragenden Teil 71.1 (in Form einer Platte), welcher an den Rändern mit der Platte 70.1 derart verbunden ist, dass der Kanal 75 gegen einen Austritt der Heizflüssigkeit abgedichtet ist. Der Werkstoff für den tragenden Teil 71.1 kann dabei so gewählt werden, dass der tragende Teil mit bestimmten Techniken, beispielsweise mit Schweissen oder Löten - besonders einfach und zuverlässig mit der Platte 70.1 verbunden werden kann. Im vorliegenden Fall könnten beispielsweise sowohl die Platte 70.1 und der tragende Teil 71.1 der Deckplatte 71 aus Aluminium gefertigt sein, wobei durch diese Wahl der Werkstoffe sichergestellt ist, dass der tragenden Teil 71.1 der Deckplatte 71 durch Schweissen mit der Platte 70.1 verbunden werden kann. Die Deckplatte 71 kann auf einer Seite oder - wie in Fig. 5 dargestellt - sowohl auf der Seite des Kanals 75 und als auch auf der vom Kanal 75 abgewandten Seite mit einer Schicht 71.2 plattiert werden, wobei die Schicht 71.2 aus einem Werkstoff bestehen kann, der sich vom Werkstoff des tragenden Teils 71.1 unterscheidet.

Der mehrschichtige Aufbau der Deckplatten 71 ermöglicht es, durch geeignete Wahl der Werkstoffe für die verschiedenen Schichten, die Eigenschaften der Deckplatten 71 nach verschiedenen Gesichtspunkten zu optimieren. Der Werkstoff der jeweiligen Schicht 71.2 muss beispielsweise nicht unbedingt mittels Schweissen mit dem Werkstoff der Platte 70.1 verbindbar sein, zumal - wie erwähnt - im vorliegenden Fall eine belastbare Verbindung zwischen einer der Deckplatten 71 und der Platte 70.1 über eine Verbindung zwischen dem jeweiligen tragenden Teil 71.1 und der Platte 70.1 realisiert werden kann. Der Werkstoff der jeweiligen Schicht 71.2 kann hingegen beispielsweise so gewählt werden, dass die jeweilige Schicht 71.2 im Hinblick auf induktives Aufheizen optimiert ist. Dementsprechend kann die jeweilige Schicht 71.2 aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein.

Die tragenden Teile 71.1 müssen nicht unbedingt gleichmässig mit der Schicht 71.2 bedeckt sein. Wie Fig. 5 andeutet, weist jede Deckplatte 71 an der Oberfläche mehrere nebeneinander liegende Bereiche auf, an deren Grenzen jeweils verschiedene, nebeneinander angeordnete Schichten 71.2 voneinander separiert sind (in Fig. 5 sind jeweils verschiedene "Bereiche" mit jeweils voneinander separierten Schichten 71.2 durch einen durchgezogenen Strich getrennt und jeweils durch das Bezugszeichen 71.2 gekennzeichnet). Diese Separation der verschiedenen Schichten 71.2 ist hilfreich, um die Auswirkung der unterschiedlichen Wärmedehnungen verschiedener Werkstoffe zu reduzieren.

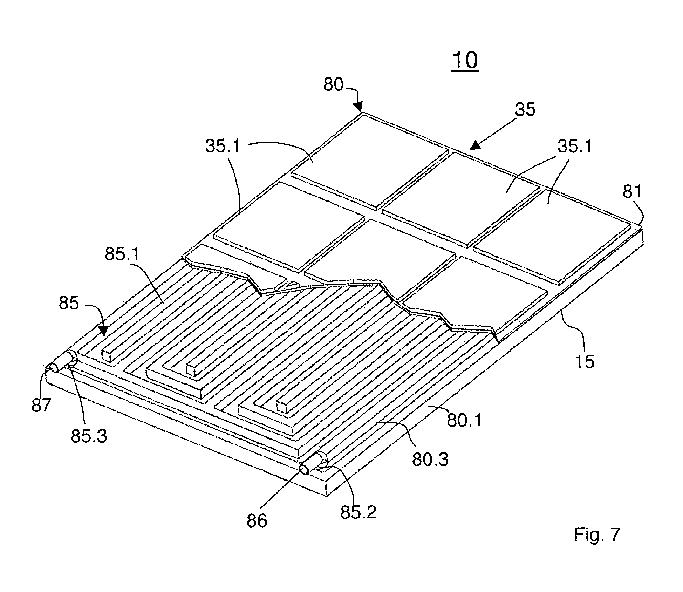

Fig. 6 und 7 zeigen eine Heizplatte 10, welche als Weiterentwicklung der Heizplatte 4 gemäss Fig. 2 angesehen werden kann. Die Heizplatte 10 umfasst einen heizbaren Körper 80 mit einer Kontaktfläche 15 für ein Werkstück und mit einem Heizkanal 85, welcher mit einer Heizflüssigkeit gefüllt ist.

Der heizbare Körper 80 umfasst eine Platte 80.1, in der auf einer Seite eine meanderförmig ausgebildete Nut 80.3 ausgebildet ist. An der Platte 80.1 ist eine Deckplatte 81 befestigt, welche die Nut 80.3 auf der der Kontaktfläche 15 gegenüber liegenden Seite abdeckt und dicht abschliesst. Der Heizkanal 85 ist dabei in der Nut 80.3 ausgebildet und jeweils durch die Platte 80.1 und die Deckplatte 81 begrenzt. Diejenigen Bereiche der Deckplatte 81, die den Heizkanal 85 begrenzen, können jeweils als "Kanalwand" im Sinne der Definition der Erfindung angesehen werden.

Der Heizkanal 85 ist zusammengesetzt aus einer Vielzahl von Längsabschnitten, die miteinander verbunden sind und relativ zueinander entweder in einem rechten Winkel zueinander oder parallel nebeneinander angeordnet sind, wobei jeweils nebeneinander angeordneten Längsabschnitte des Heizkanals 85 durch eine Trennwand 85.1 getrennt sind. Der Heizkanal 85 weist ein erstes Kanalende 85.2 und ein zweites Kanalende 85.3 auf, wobei am ersten Kanalende 85.2 eine Eingangsöffnung 86 für die Heizflüssigkeit und am zweiten Kanalende 85.3 eine Ausgangsöffnung 87 für die Heizflüssigkeit angeordnet ist. Die Ausgangsöffnung 87 ist im Betrieb der Heizplatte 10 derart mittels einer (in Fig. 6 und 7 nicht dargestellten) Verbindungsleitung mit der Eingangsöffnung 86 verbunden, dass die Heizflüssigkeit in der Längsrichtung des Heizkanals 85 zirkulieren kann.

Wie Fig. 6 und 7 zu entnehmen ist, wird die Heizflüssigkeit im Heizkanal 85 derart geführt, dass die Heizflüssigkeit bei einer Zirkulation durch den Heizkanal 85 zwei benachbarte Längsabschnitte des Heizkanals 85 jeweils in entgegengesetzten Richtungen durchströmt (Gegenstromprinzip). Diese Art der Führung der Heizflüssigkeit begünstigt einen Temperaturausgleich im Heizkanal 85 und in der Platte 80.1 und ist demnach hilfreich, um eine möglichst gleichmässige Temperaturverteilung an der Kontaktfläche 15 zu erzielen.

Zum Heizen der Heizflüssigkeit sind im vorliegenden Beispiel die Heizmittel 35 mit mehreren Heizeinrichtungen 35.1 vorgesehen. Die Heizeinrichtungen 35.1 sind an der Oberfläche der Deckplatte 81 nahezu flächendeckend angeordnet. Die Grösse der Heizeinrichtungen 35.1 ist dabei so bemessen, dass die Deckplatte 81 in jeder von zwei Dimensionen jeweils von mehreren Heizeinrichtungen 35.1 bedeckt wird.

Durch diese flächendeckende Anordnung der Heizeinrichtungen 35.1 in zwei Dimensionen wird beispielsweise erreicht, dass mehrere Heizeinrichtungen 35.1 an der jeweiligen Kanalwand über mehrere Bereiche der Kanalwand verteilt angeordnet sind, wobei jeweils verschiedene Bereiche der Kanalwand mit jeweils verschiedenen Heizeinrichtungen 35.1 beheizbar sind.

Weiterhin kann erreicht werden, dass eine einzelne Heizeinrichtung 35.1 (bedingt durch den von dieser Heizeinrichtung in der Deckplatte 81 erzeugten Wärme bzw. den jeweils erzeugten Wärmestrom) die Heizflüssigkeit gleichzeitig in einer Mehrzahl von (beispielsweise nebeneinander angeordneten) Abschnitten des Heizkanals 85 aufheizen kann, indem der von einer einzelnen Heizeinrichtung 35.1 erzeugte Wärmestrom gleichzeitig über mehrere nebeneinander angeordneten Längsabschnitte des Heizkanals 85 verteilt in die Heizflüssigkeit eingeleitet wird. Durch die vorstehend genannten Massnahmen können lokale Wärmeverluste, die in der Heizflüssigkeit beim Strömen durch den Heizkanal 85 auftreten können, ausgeglichen werden.

Weiterhin besteht die Möglichkeit, die Heizleistungen (Wärmeströme) der jeweiligen Heizeinrichtungen 35.1 jeweils unabhängig voneinander zu regulieren. Auf diese Weise können die Wärmeströme, die von verschiedenen Heizeinrichtungen 35.1 in der Deckplatte 81 erzeugt und in die Heizflüssigkeit eingeleitet werden, in zwei Dimensionen abhängig von dem jeweiligen Ort kontrolliert werden. Um die von den Heizeinrichtungen 35.1 erzeugten Wärmeströme so zu steuern, dass an der Kontaktfläche 15 eine vorgegebene Temperaturverteilung erzielt wird, ist es weiterhin möglich, die momentane Temperaturverteilung mit Sensoren zu messen und, falls Abweichungen zwischen der momentanen Temperaturverteilung und der vorgegebenen Temperaturverteilung auftreten, diese Abweichungen durch eine Steuerung der jeweils von einer der Heizeinrichtungen 35.1 erzeugten Wärmeströme zu beseitigen oder wenigstens zu minimieren.

Der Heizkanal 85 der Heizplatte 10 kann im Rahmen der Erfindung ohne weiteres modifiziert werden: Er könnte beispielsweise durch mehrere Kanalabschnitte, die zueinander parallel geschaltet sind oder verzweigt sind, oder durch mehrere getrennte Heizkanäle ersetzt werden.

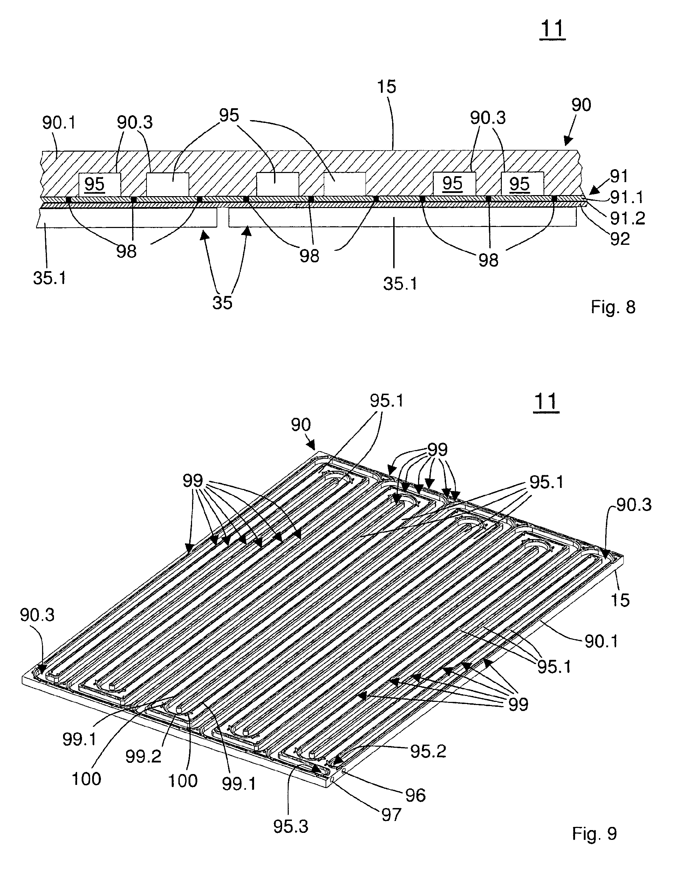

Fig. 8-10 zeigen eine Heizplatte 11, welche als Weiterentwicklung der Heizplatte 10 gemäss Fig. 6 und 7 angesehen werden kann. Die Heizplatte 11 umfasst einen heizbaren Körper 90 mit einer Kontaktfläche 15 für ein Werkstück und mit einem Heizkanal 95, welcher mit einer Heizflüssigkeit gefüllt ist.

Wie Fig. 9 zeigt, umfasst der heizbare Körper 90 einen Grundkörper in Form einer Platte 90.1, deren eine Seite die Kontaktfläche 15 bildet und in der auf einer der Kontaktfläche 15 gegenüber liegenden (zweiten) Seite eine Nut 90.3 ausgebildet ist. Die Nut 90.1 kann beispielsweise mittels Fräsen hergestellt werden. Fig. 9 zeigt die Platte 90.1 in einer perspektivischen Ansicht, welche einen Blick auf die von der Kontaktfläche 15 abgewandten Seite der Platte 90 und somit auf die Nut 90.3 erlaubt.

Am heizbaren Körper 90 bzw. an der Platte 90.1 ist eine Deckplatte 91 befestigt, welche die Nut 90.3 auf der der Kontaktfläche 15 gegenüber liegenden Seite der Platte 90.1 abdeckt, wobei der Heizkanal 95 in der Nut 90.3 zwischen der Platte 90.1 und der Deckplatte 91 ausgebildet ist (Fig. 8).

Die Nut 90.3 ist zusammengesetzt aus mehreren Nut-Abschnitten, die jeweils im Wesentlichen parallel zur Kontaktfläche 15 ausgerichtet und derart nebeneinander (entweder parallel zueinander oder im rechten Winkel zueinander) angeordnet und jeweils miteinander verbunden sind, dass die Gesamtheit aller Nut-Abschnitte eine meanderförmig ausgebildete, für die Heizflüssigkeit durchgängige Nut bilden (Fig. 9). Dabei sind benachbarte Abschnitte der Nut 90.3 bzw. des Heizkanals 95 jeweils durch Trennwände 95.1 voneinander getrennt (Fig. 9).

Der Heizkanal 95 weist ein erstes Kanalende 95.2 und ein zweites Kanalende 95.3 auf, wobei am ersten Kanalende 95.2 eine Eingangsöffnung 96 für die Heizflüssigkeit und am zweiten Kanalende 95.3 eine Ausgangsöffnung 97 für die Heizflüssigkeit angeordnet ist. Die Ausgangsöffnung 97 ist im Betrieb der Heizplatte 11 derart mittels einer (in Fig. 8 und 9 nicht dargestellten) Verbindungsleitung mit der Eingangsöffnung 96 verbunden, dass die Heizflüssigkeit in der Längsrichtung des Heizkanals 95 zirkulieren kann.

Wie Fig. 9 zu entnehmen ist, wird die Heizflüssigkeit im Heizkanal 95 derart geführt, dass die Heizflüssigkeit bei einer Zirkulation durch den Heizkanal 95 zwei benachbarte Längsabschnitte des Heizkanals 95 jeweils in entgegengesetzten Richtungen durchströmt (wie im Fall des Heizkanals 85 gemäss Fig. 6).

Wie Fig. 8 andeutet, sind an der der Kontaktfläche 15 gegenüber liegenden Seite der Heizplatte 11 Heizmittel 35 angeordnet, welche mehrere Heizeinrichtungen 35.1 zum induktiven Heizen der Deckplatte 91 umfassen. Die Deckplatte 91 bildet demnach eine "Kanalwand" im Sinne der Erfindung.

Wie Fig. 8 andeutet, erstrecken sich die Heizeinrichtungen 35.1 quer zu den jeweiligen Abschnitten der Nut 90.3 über eine derart grosse Distanz, dass eine einzelne Heizeinrichtung 35.1 (bedingt durch den von dieser Heizeinrichtung in der Deckplatte 91 erzeugten Wärme bzw. den jeweils erzeugten Wärmestrom) die Heizflüssigkeit gleichzeitig in einer Mehrzahl von (nebeneinander angeordneten) Abschnitten des Heizkanals 95 aufheizen kann, indem der von einer einzelnen Heizeinrichtung 35.1 erzeugte Wärmestrom gleichzeitig über mehrere nebeneinander angeordneten Längsabschnitte des Heizkanals 95 verteilt in die Heizflüssigkeit eingeleitet wird.

Die Platte 90.1 ist bevorzugt aus einem metallischen Werkstoff hergestellt, beispielsweise aus Kupfer, einer Kupferlegierung, Aluminium, einer Aluminiumlegierung oder Stahl.

Um zu gewährleisten, dass die Deckplatte 91 induktiv erwärmbar ist, besteht die Deckplatte aus einem elektrisch leitfähigen Material, beispielsweise aus einem Metall. Um zu gewährleisten, dass die Deckplatte 91 mit hoher Effizienz induktiv erwärmbar ist, kann die Deckplatte 91 aus einem magnetisierbaren Werkstoff, beispielsweise aus einem ferromagnetischen Werkstoff, gebildet sein oder in einem oder mehreren Bereichen jeweils mehrere Schichten umfassen, wobei mindestens eine dieser Schichten aus einem magnetisierbaren Werkstoff, beispielsweise aus einem ferromagnetischen Werkstoff, gebildet ist.

Im Ausführungsbeispiel gemäss Fig. 8 besteht die Deckplatte 91 aus zwei Schichten: einer Platte 91.1, welche die mechanische Stabilität der Deckplatte 91 gewährleisten soll und beispielsweise aus einem Leichtmetall gefertigt sein kann, und einer magnetisierbaren Schicht 91.2, welche beispielsweise aus einem ferromagnetischen Werkstoff bestehen kann. Die Schicht 91.2 kann beispielsweise mittels Plasmaspritzen, Aufdampfen oder anderen Beschichtungsverfahren auf die Platte 91.1 aufgebracht werden.

Zwischen der Deckplatte 91 und den Heizeinrichtungen 35.1 kann (optional) - wie in Fig. 9 dargestellt - ein wärmeisolierender Körper 92 angeordnet sein, beispielsweise eine Platte oder eine Folie oder eine Matte oder eine auf die Deckplatte 91 (auf der vom heizbaren Körper abgewandten Seite) aufgebrachte Schicht aus einem wärmeisolierenden Material. Diese Anordnung des wärmeisolierender Körpers 92 hat den Vorteil, dass die Heizeinrichtungen 35.1 derart an der Heizplatte 11 befestigt sein können, dass sie den wärmeisolierenden Körper berühren. Dies ermöglicht eine einfache Montage der Heizeinrichtungen 35.1 (ohne aufwändige Positionierung relativ zur Deckplatte 91), wobei zusätzlich gewährleistet ist, dass sich die Heizeinrichtungen 35.1 beim induktiven Heizen der Deckplatte 91 nicht übermässig erwärmen (aufgrund von Wärmeleitung, ausgehend von der induktiv aufgeheizten Deckplatte 91).

Wie in Fig. 8 angedeutet ist, ist die Deckplatte 91 am heizbaren Körper 90 (d.h. der Platte 90.1) mittels einer oder mehreren Schweissverbindungen 98 zwischen der Deckplatte 91 und dem heizbaren Körper 90 (d.h. der Platte 90.1) befestigt.

Im vorliegenden Beispiel erstrecken sich die jeweiligen Schweissverbindungen 98 zwischen der Deckplatte 91 und dem heizbaren Körper (d.h. der Platte 90.1) derart, dass auf jeder von zwei gegenüberliegenden Seiten der Nut 90.3 Schweissverbindungen entlang von Schweissbahnen 99 realisiert sind, welche jeweils längs jedes Abschnitts des Heizkanals 95 bzw. längs jedes Abschnitts der Nut 90.3 verlaufen. Auf diese Weise kann der Heizkanal 95 durch die jeweiligen Schweissverbindungen 98 gegen einen Austritt der Heizflüssigkeit abgedichtet werden, wie im Folgenden erläutert wird.

In Fig. 9 ist der Verlauf der Schweissbahnen 99 (relativ zu der Nut 90.3 auf der von der Kontaktfläche 15 abgewandten Seite der Platte 90.1) dargestellt, längs denen eine Schweissverbindung 98 zwischen der Platte 90.1 und der Deckplatte 91 (mittels eines geeigneten Werkzeugs zum Herstellen einer Schweissverbindung) hergestellt ist. Wie Fig. 9 andeutet, können die Schweissbahnen 99 aus einzelnen Teilstücken 99.1 und 99.2 zusammengesetzt sein, welche geradlinig und/oder gekrümmt verlaufen können und sich jeweils an Kreuzungspunkten 100 schneiden. Die Schweissverbindungen 98 zwischen der Platte 90.1 und der Deckplatte 91 können nacheinander längs der jeweiligen Teilstücke 99.1 bzw. 99.2 der Schweissbahnen 99 hergestellt werden.

Wie Fig. 9 andeutet, führt eine Herstellung von Schweissverbindungen 98 zwischen der Platte 90.1 und der Deckplatte 91 längs der Schweissbahnen 99 bzw. der jeweiligen Teilstücke 99.1 und 99.2 zu Schweissverbindungen, die auf jeder von zwei gegenüberliegenden Seiten der Nut 90.3 kontinuierlich (d.h. lückenlos) über die gesamte Länge des Heizkanals 95 verlaufen. Demzufolge ist der Heizkanal 95 durch die Schweissverbindungen 98 gegen einen Austritt der Heizflüssigkeit (zwischen der Platte 90.1 und der Deckplatte 91) abgedichtet.

Die Schweissverbindungen 98 können beispielsweise mittels Reibrührschweissen, einem Verfahren, welches auch unter dem Begriff "friction-stir welding" (FSW) bekannt ist, hergestellt werden.

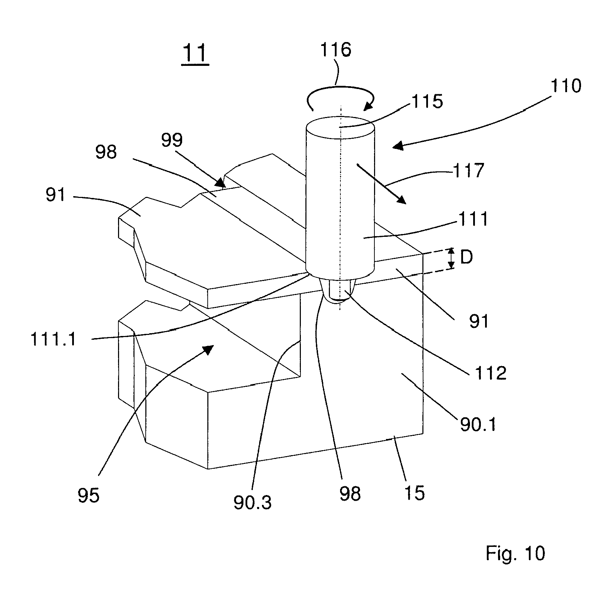

Fig. 10 zeigt, wie Schweissverbindungen 98 zwischen der Platte 90.1 und der Deckplatte 91 längs der Schweissbahnen 99 mit einem (bereits aus EP 0615480 B1 bekannten) Werkzeug 110 zum Herstellen einer Schweissverbindung mittels Reibrührschweissen hergestellt werden können.

In der Darstellung gemäss Fig. 10 ist die Deckplatte 91 mit der Platte 90.1 in Kontakt gebracht und dabei relativ zur Platte 90.1 in eine Position gebracht, in welcher die Deckplatte 91 an der Platte 90.1 mittels der Schweissverbindungen 98 fixiert werden soll.

Das Werkzeug 110 umfasst einen Zylinder 111, welcher um seine Längsachse 115 mithilfe eines (in Fig. 10 nicht dargestellten) Antriebs drehbar ist (wie in Fig. 10 durch den Pfeil 116, welcher eine Drehrichtung angibt, angedeutet ist). An einer (senkrecht zur Längsachse 115 ausgebildeten) Stirnfläche 111.1 des Zylinders 111 ist eine Sonde 112 am Zylinder 111 befestigt. Die Sonde 112 ist rotationssymmetrisch zur Längsachse 115 angeordnet und hat im vorliegenden Beispiel (aber nicht notwendigerweise) ebenfalls die Form eines Zylinders. Die Sonde 112 ist weiterhin starr mit dem Zylinder 111 verbunden, sodass die Sonde ebenfalls um die Längsachse 115 rotiert, falls der Zylinder 111 in eine Rotation um die Längsachse 115 versetzt wird.

Um mithilfe des Werkzeugs 110 eine Schweissverbindung 98 zwischen der Deckplatte 91 und der Platte 90.1 herstellen zu können, müssen sowohl der jeweilige Werkstoff der Deckplatte 91 als auch der jeweilige Werkstoff der Platte 90.1 im Bereich von Grenzflächen, an denen die Deckplatte 91 und die Platte 90.1 miteinander in Kontakt gebracht sind, mit der rotierenden Sonde 112 bearbeitet werden. Um eine derartige Bearbeitung zu ermöglichen, sollte die Sonde 112 aus einem Werkstoff gefertigt sein, welcher sowohl härter als der jeweilige Werkstoff der Deckplatte 91 als auch härter als der jeweilige Werkstoff der Platte 90.1 ist. Auf diese Weise können die Werkstoffe der Deckplatte 91 und der Platte 90.1 mit der Sonde 112 bearbeitet werden, ohne dass die Sonde 112 verschleisst. Weiterhin sollte die Erstreckung der Sonde 112 in Richtung der Längsachse 115 derart gross sein, dass die Sonde 112 die Deckplatte (von der von der Kontaktfläche 15 abgewandten Seite her) vollständig durchdringen kann. Die Erstreckung der Sonde 112 in Richtung der Längsachse 115 ist deshalb bevorzugt grösser als die Dicke D der Deckplatte 91, um zu gewährleisten, dass die Deckplatte 91 und die Platte 90.1 mit dem Werkzeug 110 bearbeitet werden können, wenn die Längsachse 115 senkrecht zur Deckplatte 91 ausgerichtet ist.

Wie Fig. 10 weiterhin andeutet, ist der Durchmesser der Sonde 112 (senkrecht zur Längsachse 115) geringer als der Durchmesser des Zylinders 111 (senkrecht zur Längsachse 115). Demzufolge bildet die Stirnfläche 111.1 des Zylinders 111 in der Umgebung der Sonde 112 eine Schulter, die mit einer Oberfläche der Deckplatte 91 in Kontakt gebracht werden kann, wenn die Sonde 112 hinreichend tief in die zu bearbeitende Deckplatte 91 bzw. die zu bearbeitende Platte 90.1 eingedrungen ist. Wenn die Stirnfläche 111.1 unter diesen Umständen mit der Deckplatte 91 in Kontakt gebracht ist, kann mithilfe des Werkzeugs 110 gleichzeitig über die Stirnfläche 111.1 eine Kraft auf die Deckplatte 91 übertragen werden, um die Deckplatte 91 gegen die Platte 90.1 zu pressen und gegebenenfalls die Bearbeitung der Deckplatte 91 und der Platte 90.1 zu beeinflussen.

Um Schweissverbindungen 98 zwischen der Deckplatte 91 und der Platte 90.1 mittels Reibrührschweissen herzustellen, wird das Werkzeug 110 in einem ersten Verfahrensschritt zunächst auf der von der Kontaktfläche 15 abgewandten Seite der Platte 90.1 derart angeordnet, dass die Sonde 112 an einem Punkt der Schweissbahn 99 in Kontakt mit der Deckplatte 91 ist, wobei die Längsachse 115 des Zylinders 111 bevorzugt (aber nicht notwendigerweise) senkrecht zur Deckplatte 91 ausgerichtet ist. Anschliessend wird der Zylinder 111 und somit die Sonde 112 in eine Rotation (gemäss Pfeil 116 in Fig. 10) versetzt und in Richtung der Längsachse 115 gegen die Deckplatte 91 bzw. in Richtung auf die Platte 90.1 gedrückt. Aufgrund der Reibung zwischen der Oberfläche der rotierenden Sonde 112 und der Deckplatte 91 wird die Temperatur der Deckplatte 91 in der Umgebung der Sonde 112 erhöht, wobei in der Regel dafür gesorgt wird, dass die Temperatur der Deckplatte 91 aufgrund der erwähnten Reibung nicht derart ansteigt, dass die Temperatur lokal die Schmelztemperatur des Werkstoffs der Deckplatte 91 erreicht oder überschreitet. In der Regel steigt die Temperatur der Deckplatte 91 aufgrund der Reibung in der Umgebung der Sonde 112 derart an, dass der Werkstoff der Deckplatte 91 in der Umgebung der Sonde 112 plastifiziert wird, d.h. der Werkstoff der Deckplatte 91 wird in der Umgebung der Sonde 112 weich. Zusätzlich wird ein Materialtransport im plastifizierten Bereich der Deckplatte 91 mithilfe der Sonde 112 induziert. Im weiteren Verlauf des Verfahrens wird das Werkzeug 110 entlang der Längsachse 115 in Richtung auf die Platte 90.1 unter Druck gesetzt. Die Sonde 112 dringt unter den genannten Umständen in den plastifizierten Bereich der Deckplatte 91 ein, bis die Sonde 112 die Deckplatte 91 durchdringt und anschliessend die Platte 90.1 erreicht. Dabei tritt die rotierende Sonde 112 mit der Platte 90.1 in Wechselwirkung, bis der Werkstoff der Platte 90.1 in der Umgebung der Sonde 112 infolge einer durch Reibung induzierten Temperaturerhöhung ebenfalls plastifiziert wird. Das Eindringen der Sonde 112 in die Deckplatte 91 bzw. die Platte 90.1 findet in der Regel ein Ende, wenn die Stirnfläche 111.1 des Zylinders 111 auf die Oberfläche der Deckplatte 91 gerät und somit ein weiteres Eindringen der Sonde 112 in die Platte 90.1 verhindert.

In weiteren Verfahrensschritten können nun Schweissverbindungen 98 entlang den in Fig. 9 dargestellten Schweissbahnen 99 bzw. entlang den jeweiligen Teilstücken 99.1 und 99.2 der Schweissbahnen 99 hergestellt werden. Zu diesem Zweck wird das Werkzeug 110 parallel zur Oberfläche der Deckplatte 91 bewegt (wie in Fig. 10 durch einen Pfeil 117, der die jeweilige Bewegungsrichtung des Werkzeugs 110 angibt, angedeutet ist), und zwar derart, dass die Sonde 112 den jeweiligen Schweissbahnen 99 bzw. den jeweiligen Teilstücken 99.1 und 99.2 der Schweissbahnen 99 folgt. Bei dieser Bewegung des Werkzeugs 110 (in Richtung des Pfeils 117) findet ein Materialtransport von Werkstoffen in den Bereichen der Deckplatte 91 und der Platte 90.1 statt, welche unter Einwirkung der Sonde 112 plastifiziert wurden. Bei diesem Materialtransport werden Werkstoffe, die aus Bereichen der Deckplatte 91 und der Platte 90.1 stammen, welche - in der Bewegungsrichtung des Werkzeugs 110 gemäss Pfeil 117 betrachtet - "vor" der Sonde 112 angeordnet sind, transportiert in einen Raumbereich, welcher - in der Bewegungsrichtung des Werkzeugs 110 gemäss Pfeil 117 betrachtet - "hinter" der Sonde 112 liegt. Die derart transportierten, plastifizierten Werkstoffe kühlen in dem genannten, "hinter" der Sonde 112 gelegen Raumbereich ab, wobei sie sich wieder verfestigen und im verfestigten Zustand eine stabile Verbindung zwischen der Deckplatte 91 und der Platte 90.1 bilden: die bereits erwähnten Schweissverbindungen 98 (siehe Fig. 10). Demgemäss werden entlang den in Fig.9 dargestellten Schweissbahnen 99 bzw. entlang den jeweiligen Teilstücken 99.1 und 99.2 der Schweissbahnen 99 jeweils lückenlos Schweissverbindungen 98 geschaffen, wenn die Sonde 112 - wie oben beschrieben - entlang den Schweissbahnen 99 bzw. entlang den jeweiligen Teilstücken 99.1 und 99.2 der Schweissbahnen 99 bewegt wird.

Das vorstehend genannte Verfahren hat den Vorteil, dass relativ grosse Platten 90.1 jeweils mit einer entsprechend grossen Deckplatte 91 längs relativ langen Schweissbahnen 99 kostengünstig verschweisst werden können, wobei weder die jeweilige Platte 90.1 noch die jeweilige Deckplatte 91 lokal geschmolzen werden muss. Dementsprechend kann der Heizkanal 95 eine relativ grosse Länge aufweisen und mittels der Schweissverbindungen 98 über seine gesamte Länge zwischen der Platte 90.1 und der Deckplatte 91 abgedichtet werden. Ein weiterer Vorteil kann darin gesehen werden, dass keine zusätzlichen Werkstoffe benötigt bzw. verbraucht werden, um eine Verbindung zwischen der Deckplatte 91 und der Platte 90.1 herzustellen.

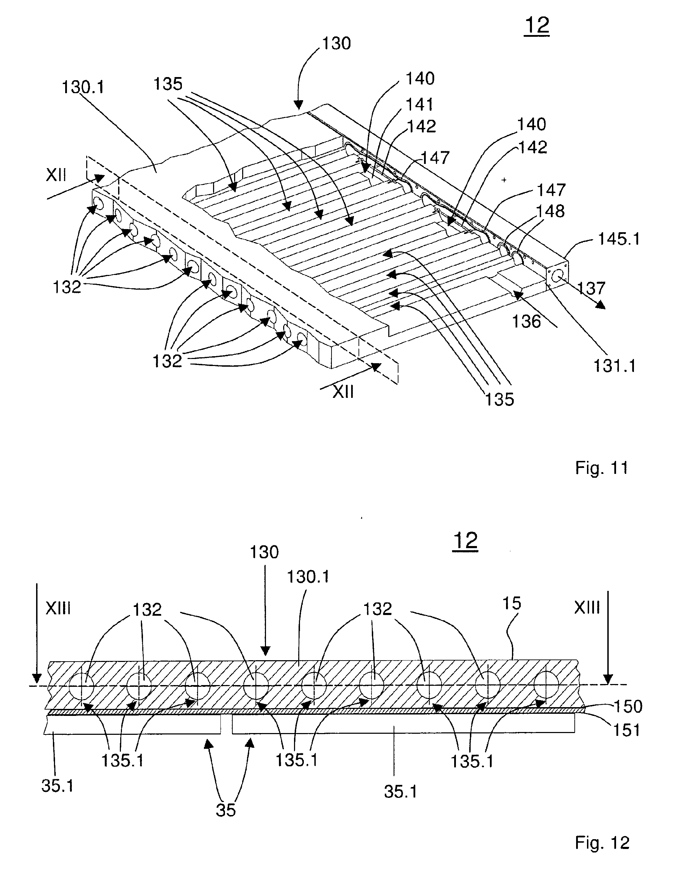

Fig. 11-13 zeigen eine Heizplatte 12, welche als Weiterentwicklung der Heizplatte 8 gemäss Fig. 4 angesehen werden kann. Die Heizplatte 12 umfasst einen heizbaren Körper 130 mit einer Kontaktfläche 15 für ein Werkstück und mit einem Heizkanal 135, welcher mit einer Heizflüssigkeit gefüllt ist.

Der Heizkanal 135 hat - in einer Projektion auf die Kontaktfläche 15 - einen ähnlichen Verlauf wie der Heizkanal 95 der Heizplatte 11 gemäss Fig. 8 und 9, ist allerdings mit anderen Mitteln realisiert.

Wie Fig. 11-13 zeigen, umfasst der heizbare Körper 130 eine Platte 130.1, welche auf einer Seite die Kontaktfläche 15 bildet. Die Platte 130.1 ist im vorliegenden Beispiel (allerdings nicht zwingend) rechteckig und weist eine Mehrzahl von Bohrungen 132 auf, welche jeweils zwischen zwei gegenüberliegenden Stirnflächen 131.1 und 131.2 des heizbaren Körpers durchgehend ausgebildet sind. Die verschiedenen Bohrungen 132 haben einen runden Querschnitt und sind im vorliegenden Fall parallel zueinander und jeweils parallel zur Kontaktfläche 15 angeordnet.

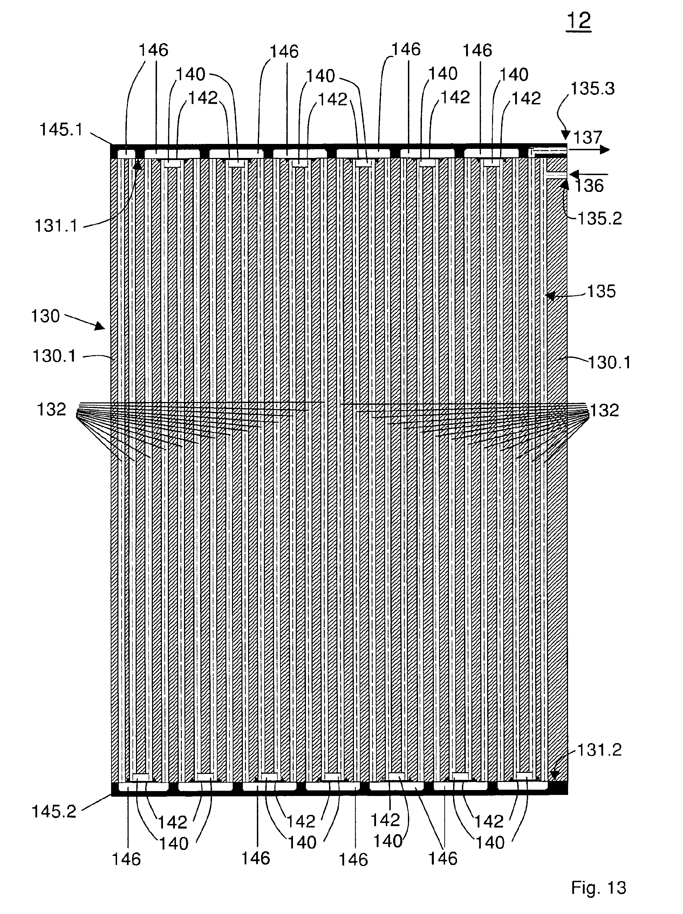

Die jeweiligen Bohrungen 132 bilden jeweils einen (Längs-) Abschnitt des Heizkanals 135 und sind über verschiedene Verbindungskanäle 140 bzw. 146 miteinander verbunden. Wie die Fig. 11 und 13 andeuten, verlaufen die Verbindungskanäle 140 bzw. 146 im vorliegenden Beispiel (aber nicht notwendigerweise) jeweils im Wesentlichen senkrecht zu den Bohrungen 132 und parallel zu den Stirnflächen 131.1 bzw. 131.2. Im vorliegenden Beispiel verbinden die Verbindungskanäle 140 bzw. 146 jeweils zwei Bohrungen 132 jeweils an ihren Enden an einer der Stirnflächen 131.1 bzw. 131.2, derart, dass alle Bohrungen 132 und alle Verbindungskanäle 140 und 146 jeweils an ihren Enden seriell miteinander verbunden sind und demzufolge jeweils verschiedene Längsabschnitte des Heizkanals 135 bilden.

Dementsprechend weist der Heizkanal 135 ein erstes Kanalende 135.2 und ein zweites Kanalende 135.3 auf, wobei am ersten Kanalende 135.2 eine Eingangsöffnung 136 für die Heizflüssigkeit und am zweiten Kanalende 135.3 eine Ausgangsöffnung 137 für die Heizflüssigkeit angeordnet ist. Die Ausgangsöffnung 137 ist im Betrieb der Heizplatte 12 derart mittels einer (in Fig. 11-13 nicht dargestellten) Verbindungsleitung mit der Eingangsöffnung 136 verbunden, dass die Heizflüssigkeit in der Längsrichtung des Heizkanals 135 zirkulieren kann.

Wie Fig. 13 zu entnehmen ist, wird die Heizflüssigkeit im Heizkanal 135 derart geführt, dass die Heizflüssigkeit bei einer Zirkulation durch den Heizkanal 135 zwei benachbarte Längsabschnitte des Heizkanals 135 jeweils in entgegengesetzten Richtungen durchströmt (wie im Fall der Heizkanäle 85 und 95).

Weiterhin ist in Fig. 12 erkennbar, dass an der der Kontaktfläche 15 gegenüber liegenden Seite der Heizplatte 12 Heizmittel 35 angeordnet sind, welche mehrere Heizeinrichtungen 35.1 zum induktiven Heizen derjenigen Bereiche 135.1 des heizbaren Körpers 130 bzw. der Platte 130.1 umfassen, welche auf einer von der Kontaktfläche 15 abgewandten Seite des heizbaren Körpers 130 bzw. der Platte 130.1 an die jeweiligen Bohrungen 132 grenzen. Diese Bereiche 135.1 des heizbaren Körpers 130 bzw. der Platte 130.1 bilden demnach eine "Kanalwand" im Sinne der Erfindung.

Wie Fig. 12 andeutet, erstrecken sich die Heizeinrichtungen 35.1 quer zu den jeweiligen Bohrungen 132 über eine derart grosse Distanz, dass eine einzelne Heizeinrichtung 35.1 die Heizflüssigkeit gleichzeitig in einer Mehrzahl von Bohrungen 132 aufheizen kann.

Die Platte 130.1 ist bevorzugt aus einem metallischen Werkstoff hergestellt, beispielsweise aus Kupfer, einer Kupferlegierung, Aluminium, einer Aluminiumlegierung oder Stahl. Unter dieser Voraussetzung ist die Platte 130.1 wegen ihrer relativ hohen elektrischen Leitfähigkeit in der Regel mittels der Heizeinrichtungen 35.1 in der Umgebung der Bohrungen induktiv erwärmbar. Falls die Platte 130.1 nicht aus einem magnetisierbaren Werkstoff besteht, kann auf der der Kontaktfläche 15 gegenüber liegenden Seite der Platte 130.1 (mindestens bereichsweise in der Nähe der jeweiligen Bohrungen 132) eine Schicht 150 aus einem magnetisierbaren Werkstoff, beispielsweise aus einem ferromagnetischen Werkstoff, angeordnet werden. Die Schicht 150 kann beispielsweise mittels Plasmaspritzen, Aufdampfen oder anderen Beschichtungsverfahren auf die Platte 130.1 aufgebracht werden.

Wie Fig. 12 weiterhin andeutet, kann zwischen dem heizbaren Körper 130 bzw. der Schicht 150 und der jeweiligen Heizeinrichtung 135.1 ein wärmeisolierender Körper 151 angeordnet sein (entsprechend dem wärmeisolierender Körper 92 im Falle der Heizplatte 11, siehe Fig. 8).

Dies ermöglicht (wie im Falle der Heizplatte 11) eine einfache Montage der Heizeinrichtungen 35.1 (ohne aufwändige Positionierung relativ zum heizbaren Körper 130), wobei zusätzlich gewährleistet ist, dass sich die Heizeinrichtungen 35.1 beim induktiven Heizen des heizbaren Körpers 130 nicht übermässig erwärmen.

Im Folgenden werden Möglichkeiten für eine Realisierung der Verbindungskanäle 140 bzw. 146 dargestellt, welche verschiedene Bohrungen 132 verbinden.

Wie Fig. 11 und 13 zeigen, sind die Verbindungskanäle 140 jeweils an einer der jeweiligen Stirnflächen 131.1 bzw. 131.2 des heizbaren Körpers 130 bzw. der Platte 130.1 angeordnet und jeweils in Form einer im heizbaren Körper 130 bzw. in der Platte 130.1 ausgebildeten Ausnehmung 141 realisiert, welche in jeweils zwei der jeweiligen Bohrungen 132 mündet und beispielsweise mittels Fräsen hergestellt werden kann. Weiterhin ist im Bereich jeder Ausnehmung 141 an der jeweiligen Stirnfläche 131.1 bzw. 131.2 des heizbaren Körpers 130 bzw. der Platte 130.1 jeweils ein Abdeckelement 142 (im vorliegenden Beispiel in Form einer Platte) angeordnet, welches die jeweilige Ausnehmung 141 und die jeweiligen Bohrungen 132, in welche die Ausnehmung 141 mündet, abdeckt. Jedes dieser Abdeckelemente 142 bildet einen Abschnitt einer Wand des Heizkanals 135 und dient dementsprechend der Führung der Heizflüssigkeit innerhalb des Heizkanals 135.

Wie Fig. 11 und 13 weiter zeigen, sind die Verbindungskanäle 146 jeweils in einem von zwei Abschlussstücken 145.1 bzw. 145.2 ausgebildet, welche an jeweils einer der Stirnflächen 131.1 bzw. 131.2 des heizbaren Körpers 130 derart angeordnet sind, dass das jeweilige Abschlussstück 145.1 bzw. 145.2 die jeweiligen Bohrungen 132 auf der jeweiligen Stirnfläche 131.1 bzw. 131.2 abdeckt. Dabei mündet jeder Verbindungskanal 146 an der den jeweiligen Bohrungen 132 zugewandten Seite des jeweiligen Abschlussstücks 145.1 bzw. 145.2 in zwei der von dem jeweiligen Abschlussstück 145.1 bzw. 145.2 abgedeckten Bohrungen 132.

Der jeweilige Verbindungskanal 146 kann beispielsweise als Bohrung oder als eine (beispielsweise mittels Fräsen herstellbare) Ausnehmung in dem jeweiligen Abschlussstück 145.1 bzw. 145.2 ausgebildet sein. Es sei ferner darauf hingewiesen, dass die Ausgangsöffnung 137 im vorliegenden Beispiel in dem Abschlussstück 145.1 in Form einer Bohrung, welche in eine der Bohrungen 132 mündet, ausgebildet ist (Fig. 13).

Zur Abdichtung des Heizkanals 135 gegen einen Austritt von Heizflüssigkeit dienen im vorliegenden Fall Schnurdichtungen 147 oder Dichtungsringe 148, welche jeweils zwischen eines der jeweiligen Abschlussstücke 145.1 bzw. 145.2 und die jeweilige Stirnfläche 131.1 bzw. 131.2 (jeweils um eine oder mehrere Bohrungen 132 herum) gelegt sind (Fig. 11). Die jeweiligen Abdeckelemente 142 müssen im vorliegenden Beispiel die Ausnehmungen 140 nicht dicht abschliessen, zumal ein Leck zwischen einer der Ausnehmungen 141 und der Platte 130.1 nicht dazu führt, dass Heizflüssigkeit den Heizkanal 135 verlässt, sofern die Abschlussstücke 145.1 und 145.2 bezüglich der Platte 130.1 an den jeweiligen Stirnflächen 131.1 bzw. 131.2 abgedichtet sind (beispielsweise mittels der Schnurdichtungen 147 und der Dichtungsringe 148).

Die Heizplatte 12 hat den Vorteil, dass auf der Grundlage einer Kombination von einer Mehrzahl von durchgehenden Bohrungen 132 innerhalb der Platte 130.1 und von Verbindungskanälen 140 bzw. 146, welche jeweils verschiedene Bohrungen 132 an Stirnflächen 131.1 bzw. 131.2 verbinden, in und/oder an einer relativen grossen Platte 130.1 ein relativ langer Heizkanal 135 einfach hergestellt werden kann, zumal die Verbindungskanäle 140 bzw. 146 relativ leicht zugänglich sind und deshalb mit relativ wenig Aufwand hergestellt werden können. Weiterhin kann der Heizkanal 135 mit einfachen Mitteln gegen einen Austritt von Heizflüssigkeit abgedichtet werden.

Die Heizplatte 12 kann im Rahmen der Erfindung auf verschiedene Weisen modifiziert werden. Beispielsweise könnten zur Verbindung der jeweiligen Bohrungen 132 auch wahlweise ausschliesslich Verbindungskanäle 140 oder ausschliesslich Verbindungskanäle 146 an einer der Stirnflächen 131.1 bzw. 131.2 oder an beiden Stirnflächen 131.1 und. 131.2 realisiert werden. Ausserdem können die Verbindungskanäle 140 bzw. 146 auch so konstruiert werden, dass sie jeweils mehr als zwei Bohrungen 132 miteinander verbinden.

## Patentansprüche

1. Heizplatte (2, 4, 6, 8, 9, 10, 11, 12) für Werkstücke,
mit einem heizbaren Körper (20, 40, 50, 60, 70, 80, 90, 130), welcher auf einer ersten Seite eine Kontaktfläche (15) für das jeweilige Werkstück aufweist,
mit mindestens einem mit einer Heizflüssigkeit gefüllten Heizkanal (25, 45, 55, 65, 75, 85, 95, 135) zum Heizen des heizbaren Körpers (20, 40, 50, 60, 70, 80, 90, 130), welcher Heizkanal (25, 45, 55, 65, 75, 85, 95, 135) in und/oder an dem heizbaren Körper (20, 40, 50, 60, 70, 80, 90, 130) gegenüber der Kontaktfläche (15) ausgebildet ist, und
mit Heizmitteln (35) zum Heizen der Heizflüssigkeit,
**dadurch gekennzeichnet, dass**
eine Kanalwand (25.1, 45.1, 50.4, 65.1, 71, 81, 91, 135.1) des jeweiligen Heizkanals (25, 45, 55, 65, 75, 85, 95, 135) induktiv erwärmbar ist und die Heizmittel (35) mindestens eine Heizeinrichtung (35.1) zum induktiven Heizen der jeweiligen Kanalwand (25.1, 45.1, 50.4, 65.1, 71, 81, 91, 135.1) umfassen,
wobei die jeweilige Heizeinrichtung (35.1) ausserhalb des jeweiligen Heizkanals (25, 45, 55, 65, 75, 85, 95, 135) angeordnet ist und die Heizflüssigkeit in dem jeweiligen Heizkanal durch einen Übergang von Wärme, welche mittels der Heizeinrichtung (35.1) in der jeweiligen Kanalwand (25.1, 45.1, 50.4, 65.1, 71, 81, 91, 135.1) erzeugbar ist, erwärmbar ist.

2. Heizplatte (2, 4, 6, 8, 9, 10, 11, 12) nach Anspruche 1,
wobei
der heizbare Körper (20, 40, 50, 60, 70, 80, 90, 130) einen Grundkörper (20.1, 40.1, 50.1, 60.1, 70.1, 80.1, 90.1, 130.1) aus Kupfer, einer Kupferlegierung, Aluminium, einer Aluminiumlegierung oder Stahl umfasst.

3. Heizplatte (2, 4) nach Anspruch 2, wobei
der heizbare Körper eine oder mehrere Deckschichten (20.2, 20.3, 40.2, 40.4) aus Stahl umfasst, welche auf den Grundkörper (20.1, 40.1) auf der Seite der Kontaktfläche (15) und/oder auf einer der Kontaktfläche (15) gegenüberliegenden Seite des Grundkörpers (20.1, 40.1) aufgebracht sind, beispielsweise durch Sprengplattieren.

4. Heizplatte (2, 4, 6, 8, 9, 10, 11, 12) nach einem der Ansprüche 1 - 3, wobei
wobei die jeweilige Kanalwand (25.1, 45.1, 50.4, 71, 81) aus einem magnetisierbaren Werkstoff, beispielsweise aus einem ferromagnetischen Werkstoff, gebildet ist
oder die jeweilige Kanalwand (71, 91, 135.1) in einem oder mehreren Bereichen jeweils mehrere Schichten (71.1, 71.2, 91.1, 91.2) umfasst und mindestens eine der Schichten (71.2, 91.2, 150) in dem jeweiligen Bereich aus einem magnetisierbaren Werkstoff, beispielsweise aus einem ferromagnetischen Werkstoff, gebildet ist.

5. Heizplatte (2) nach einem der Ansprüche 1-4, wobei
der heizbare Körper (20) auf einer der Kontaktfläche (15) gegenüber liegenden zweiten Seite eine ebene Oberfläche aufweist und die Kanalwand (25.1) aus einem Bauteil gebildet ist, welches an Kontaktbereichen zwischen dem Bauteil und der ebenen Oberfläche derart mit der ebenen Oberfläche verbunden ist, dass der Heizkanal (25) an den jeweiligen Kontaktbereichen für die Heizflüssigkeit dicht ist.

6. Heizplatte (4, 6, 9, 10, 11) nach einem der Ansprüche 1-2, wobei
der heizbare Körper (40, 50, 70, 80, 90) auf einer der Kontaktfläche (15) gegenüber liegenden zweiten Seite mindestens eine Nut (40.3, 50.3, 70.3, 80.3, 90.3) aufweist und am heizbaren Körper (40, 50, 70, 80, 90) eine oder mehrere Deckplatten (40.4, 50.4, 71, 81, 91) befestigt sind, welche die jeweilige Nut (40.3, 50.3, 70.3, 80.3, 90.3) auf der zweiten Seite des heizbaren Körpers (40, 50, 70, 80, 90) abdecken,
wobei der jeweilige Heizkanal (45, 55, 75, 85, 95) in einer der jeweiligen Nuten (40.3, 50.3, 70.3, 80.3, 90.3) zwischen dem heizbaren Körper (40, 50, 70, 80, 90) und den jeweiligen Deckplatten (40.4, 50.4, 71, 81, 91) ausgebildet ist und die jeweilige Kanalwand von den jeweiligen Deckplatten (40.4, 50.4, 71, 81, 91) gebildet ist, welche die jeweilige Nut (40.3, 50.3, 70.3, 80.3, 90.3)abdecken.

7. Heizplatte (4, 6, 9, 10, 11) nach einem der Ansprüche 1-2, wobei
der heizbare Körper (40, 50, 70, 80, 90) auf einer der Kontaktfläche (15) gegenüber liegenden zweiten Seite mehrere nebeneinander angeordnete Nuten und/oder mindestens eine Nut (40.3, 50.3, 70.3, 80.3, 90.3) mit mehreren nebeneinander angeordneten Nut-Abschnitten aufweist und am heizbaren Körper eine oder mehrere Deckplatten (40.4, 50.4, 71, 81, 91) befestigt sind, welche die jeweilige Nut (40.3, 50.3, 70.3, 80.3, 90.3) und/oder die jeweiligen Nut-Abschnitte auf der zweiten Seite des heizbaren Körpers (40, 50, 70, 80, 90) abdecken, wobei der jeweilige Heizkanal (45, 55, 75, 85, 95) in einer der jeweiligen Nuten (40.3, 50.3, 70.3, 80.3, 90.3) zwischen dem heizbaren Körper (40, 50, 70, 80, 90) und den jeweiligen Deckplatten (40.4, 50.4, 71, 81, 91) ausgebildet ist und die jeweilige Kanalwand von den jeweiligen Deckplatten (40.4, 50.4, 71, 81, 91) gebildet ist, welche die jeweilige Nut (40.3, 50.3, 70.3, 80.3, 90.3) und/oder die jeweiligen Nut-Abschnitte abdecken.

8. Heizplatte (11) nach einem der Ansprüche 6 oder 7, wobei die jeweilige Deckplatte (91) am heizbaren Körper (90) mittels einer oder mehreren Schweissverbindungen (98) zwischen der Deckplatte (91) und dem heizbaren Körper (90) befestigt ist.

9. Heizplatte (11) nach Anspruch 8, wobei
die jeweilige Schweissverbindung (98) mittels Reibrührschweissen entlang einer Schweissbahn (99, 99.1, 99.2) realisiert ist, welche entlang einer der jeweiligen Nuten (90.3) und/oder entlang den jeweiligen Nut-Abschnitten ausgebildet ist.

10. Heizplatte (11) nach einem der Ansprüche 8 oder 9, wobei sich auf jeder von zwei gegenüberliegenden Seiten der jeweiligen Nut (90.3) eine oder mehrere Schweissverbindungen (98) zwischen der jeweiligen Deckplatte (91) und dem heizbaren Körper (90) derart erstrecken, dass der jeweilige Heizkanal (95) durch die jeweiligen Schweissverbindungen (98) gegen einen Austritt der Heizflüssigkeit abgedichtet ist.

11. Heizplatte (11) nach einem der Ansprüche 6-10, wobei
die jeweilige Deckplatte (91) aus einem magnetisierbaren Werkstoff, beispielsweise aus einem ferromagnetischen Werkstoff, gebildet ist oder
die jeweilige Deckplatte (91) in einem oder mehreren Bereichen jeweils mehrere Schichten (91.1, 91.2) umfasst und mindestens eine dieser Schichten (91.2) in dem jeweiligen Bereich aus einem magnetisierbaren Werkstoff, beispielsweise aus einem ferromagnetischen Werkstoff, gebildet ist.

12. Heizplatte (11) nach Anspruch 11, wobei
zwischen der jeweiligen Deckplatte (91) und der jeweiligen Heizeinrichtung (35.1) ein wärmeisolierender Körper (92) angeordnet ist oder die Deckplatte (91) auf der vom heizbaren Körper (90) abgewandten Seite eine Schicht (92) aus einem wärmeisolierenden Material umfasst.

13. Heizplatte (12) nach einem der Ansprüche 1-2,
wobei der heizbare Körper (130) eine Mehrzahl von Bohrungen (132) aufweist, welche jeweils zwischen zwei gegenüberliegenden Stirnflächen (131.1, 131.2) des heizbaren Körpers (130) durchgehend ausgebildet sind,
wobei die jeweiligen Bohrungen (132) jeweils einen Abschnitt des Heizkanals (135) bilden und über mindestens einen für die Heizflüssigkeit durchgängigen Verbindungskanal miteinander verbunden sind, und
wobei die jeweilige Kanalwand (135.1) von Bereichen des heizbaren Körpers (130) gebildet ist, welche auf einer von der Kontaktfläche (15) abgewandten Seite des heizbaren Körpers (130) an die jeweiligen Bohrungen (132) grenzen.

14. Heizplatte (12) nach Anspruch 13, wobei
mindestens einer der jeweiligen Verbindungskanäle (140) an einer der jeweiligen Stirnflächen (131.1, 131.2) des heizbaren Körpers (130) angeordnet ist und in Form einer im heizbaren Körper (130) ausgebildeten Ausnehmung (141) realisiert ist, welche in mindestens zwei der jeweiligen Bohrungen (132) mündet,
wobei an der einen der jeweiligen Stirnflächen (131.1, 131.2) ein Abdeckelement (142) angeordnet ist, welches die Ausnehmung (141) und die jeweiligen Bohrungen (132), in welche die Ausnehmung (141) mündet, abdeckt.

15. Heizplatte (12) nach einem der Ansprüche 14 oder 15, wobei
mindestens einer der jeweiligen Verbindungskanäle (146) in einem Abschlussstück (145.1, 145.2) ausgebildet ist, welches an einer der jeweiligen Stirnflächen (131.1, 131.2) des heizbaren Körpers (130) derart angeordnet ist, dass das Abschlussstück (145.1, 145.2) zumindest zwei der jeweiligen Bohrungen (132) abdeckt,
wobei dieser eine der jeweiligen Verbindungskanäle (146) an der den jeweiligen Bohrungen (132) zugewandten Seite des Abschlussstücks (145.1, 145.2) in mindestens zwei der vom Abschlussstück (145.1, 145.2) abgedeckten Bohrungen (132) mündet.

16. Heizplatte (12) nach einem der Ansprüche 13-15, wobei
der heizbare Körper (130) auf der der Kontaktfläche (15) gegenüber liegenden Seite mindestens bereichsweise eine Schicht (150) aus einem magnetisierbaren Werkstoff, beispielsweise aus einem ferromagnetischen Werkstoff, aufweist.

17. Heizplatte (12) nach einem der Ansprüche 13-16, wobei
zwischen dem heizbaren Körper (130) und der jeweiligen Heizeinrichtung (35.1) ein wärmeisolierender Körper (151) angeordnet ist.

18. Heizplatte (10, 11, 12) nach einem der Ansprüche 1-17,
wobei
die Heizplatte mehrere nebeneinander angeordnete Heizkanäle und/oder mehrere nebeneinander angeordnete Abschnitte eines Heizkanals (85, 95, 135) aufweist und die jeweilige Heizeinrichtung (35.1) bezüglich jeweils nebeneinander angeordneten Heizkanälen und/oder bezüglich der jeweils nebeneinander angeordneten Abschnitte des einen Heizkanals (85, 95, 135) derart angeordnet ist, dass die Heizflüssigkeit in einer Mehrzahl der Heizkanäle und/oder in einer Mehrzahl der Abschnitte des einen Heizkanals (85, 95, 135) mittels dieser Heizeinrichtung (35.1) aufheizbar ist.

19. Heizplatte (2, 4, 6, 8, 9, 10) nach einem der Ansprüche 1-18, wobei
die Heizmittel (35) mehrere Heizeinrichtungen (35.1) umfassen, die an der jeweiligen Kanalwand (25.1, 45.1, 50.4, 65.1, 71, 81) über mehrere Bereiche der Kanalwand verteilt angeordnet sind, wobei verschiedene Bereiche der Kanalwand mit jeweils verschiedenen Heizeinrichtungen (35.1) beheizbar sind.
